# EUROPÄISCHE PATENTSCHRIFT

(11) **EP 3 885 484 B1**
(45) Veröffentlichungstag und Bekanntmachung des Hinweises auf die Patenterteilung: **20.12.2023**
(21) Anmeldenummer: 21164715.1
(22) Anmeldetag: 24.03.2021
(51) Int. Cl.: D06F 67/04

(54) **VERFAHREN ZUM ERGREIFEN TEXTILER GEGENSTÄNDE**
METHOD FOR GRIPPING TEXTILE OBJECTS
PROCÉDÉ DE PRÉHENSION DES OBJETS TEXTILES

(30) Priorität: 27.03.2020 DE 102020001961
(43) Veröffentlichungstag der Anmeldung: 29.09.2021
(73) Patentinhaber: Herbert Kannegiesser GmbH, 32602 Vlotho (DE)
(72) Erfinder: Heinz, Engelbert, 32602 Vlotho (DE); Bringewatt, Wilhelm, 32457 Porta Westfalica (DE)
(74) Vertreter: Möller, Friedrich

(56) Entgegenhaltungen:
- EP-A1- 3 029 195
- WO-A1-2021/001039
- WO-A1-2021/034190
- JP-A- 2010 273 732

## Beschreibung

Die Erfindung betrifft ein Verfahren zum Ergreifen textiler Gegenstände gemäß dem Oberbegriff des Anspruchs 1.

Man ist bestrebt, die Abläufe in Wäschereien zunehmen zu automatisieren. Das macht es erforderlich, die in Wäschereien zu behandelnden textilen Gegenstände, vor allem Flachwäsche, automatisch zu ergreifen.

Aus der DE 10 2017 005 954 A1 ist es bekannt, den jeweiligen von einer ersten Stelle herunterhängenden textilen Gegenstand an einer zweiten Stelle automatisch zu ergreifen. Diese zweite Stelle wird von einem Haltemittel einer Handhabungseinrichtung ergriffen, die von Daten einer bildgebenden Einrichtung gesteuert wird. Textile Gegenstände hängen von der ersten Stelle unkontrolliert, insbesondere in beliebige Richtungen verdreht, herunter. Die bildgebende Einrichtung kann daher die vom Haltemittel zu ergreifende andere Stelle nicht immer zuverlässig erkennen. Dadurch kann es vorkommen, dass das Haltemittel von Daten gesteuert wird, die es dem Haltemittel nicht ermöglichen, die gewünschte andere bzw. zweite Stelle zuverlässig automatisch zu ergreifen.

Die EP 3 029 195 A1 offenbart ein Verfahren und eine Vorrichtung zum Zuführen von Wäschestücken zu einer Mangel oder dergleichen, bei der Kameras vorgesehen sind, um eine zu ergreifende Ecke eines Wäschestücks zu detektieren. Dabei kann es vorgesehen sein, von zwei gegenüberliegenden Kameras das Oberflächenprofil bzw. die Topografie des Wäschestücks von gegenüberliegenden Seiten des Wäschestücks aufzunehmen.

Aus der JP 2010-273732 A ist eine Vorrichtung zum Zuführen von Wäschestücken zu einer Mangel oder dergleichen bekannt, die über mehrere Kameras verfügt, die an unterschiedlichen Stellen der Vorrichtung verschiedene Stellen von Wäschestücken erfassen. Dabei ist jeweils eine Kamera einem zu vereinzelnden Wäschehaufen, einem Förderer, einer Hubstation und einer an einer schrägen Schiene verfahrbaren Klammer zugeordnet.

Schließlich ist in der nachveröffentlichten WO 2021/034190 A1 ein Verfahren und eine Vorrichtung zum Zuführen von Wäschestücken zu einem Förderer oder einer sonstigen Behandlungsvorrichtung bekannt, bei der an einer Vereinzelungsstelle und an einer Greifstelle eines Wäschestücks mindestens eine Kamera vorgesehen sein soll.

Ausgehend vom Vorstehenden liegt der Erfindung die Aufgabe zugrunde, ein leistungsfähiges Verfahren zum zuverlässigen automatischen Ergreifen textiler Gegenstände zu schaffen.

Ein Verfahren zur Lösung dieser Aufgabe weist die Maßnahmen des Anspruchs 1 auf. Durch die mindestens zwei bildgebenden Einrichtungen kann der jeweilige textile Gegenstand zumindest im Bereich der wenigstens einen zu erfassenden anderen Stelle aus unterschiedlichen Richtungen bzw. Blickwinkeln bildlich erfasst werden. Es wird von jeder bildgebenden Einrichtung mindestens ein so großer Teil des jeweiligen textilen Gegenstands erfasst, in dem bei allen vorkommenden textilen Gegenständen, insbesondere unterschiedlich großen textilen Gegenständen, sich die oder jede andere Stelle üblicherweise befindet. Die bildliche Erfassung des jeweiligen textilen Gegenstands von den bildgebenden Einrichtungen aus unterschiedlichen Blickwinkeln führt dazu, dass die wenigstens eine zu ergreifende andere Stelle zuverlässig ermittelbar ist, und zwar unabhängig davon, in welcher Relativlage sich der textile Gegenstand zur bildlichen Erfassung seiner wenigstens einen anderen bzw. zweiten unteren Stelle befindet.

Vorzugsweise sind die bildgebenden Einrichtungen so dem jeweiligen textilen Gegenstand zugeordnet, insbesondere um den textilen Gegenstand herum verteilt, dass die Blickrichtung bzw. der Blickwinkel mindestens einer bildgebenden Einrichtung idealerweise senkrecht oder mit einer Abweichung von nicht mehr als 40°, vorzugsweise nur 5° bis 30°, zur Ebene des betreffenden textilen Gegenstands und/oder der wenigstens einen zu ergreifenden anderen Stelle gerichtet ist. Dadurch kann wenigstens eine der mehreren bildgebenden Einrichtungen die zu ergreifende andere Stelle so erfassen, dass die bildgebende Einrichtung die andere Stelle flächig oder nahezu flächig erfassen und das Haltemittel anhand von Daten, insbesondere Bilddaten, mindestens einer bildgebenden Einrichtung den textilen Gegenstand an der wenigstens einen anderen Stelle zuverlässig ergreifen kann.

Bevorzugt ist es bei zwei vorzugsweise gleichen bildgebenden Einrichtungen vorgesehen, dass diese die jeweils zu ergreifende andere Stelle aus 90° bis 180° voneinander abweichenden Blickrichtungen oder Winkeln aufnehmen. Dann verlaufen die Blickwinkel der beiden bildgebenden Einrichtungen unter einem 90°-Winkel zueinander oder sie liegen sich gegenüber. Darüber hinaus ist es denkbar, dass die bildgebenden Einrichtungen so relativ zueinander angeordnet sind, dass ihre Blickwinkel um mehr als 90°, aber weniger als 180° versetzt zueinander sind. Aufgrund solcher Relativanordnungen der beiden bildgebenden Einrichtungen kann die jeweilige andere Stelle zuverlässig erfasst werden, und zwar unabhängig von der Ausrichtung des betreffenden textilen Gegenstands. Der von der ersten Stelle herunterhängende textile Gegenstand kann dadurch um eine vertikale Achse beliebig verdreht sein, aber gleichwohl zuverlässig die oder die jeweilige zu ergreifende andere Stelle von mindestens einer der beiden bildgebenden Einrichtungen so erfasst werden, dass aussagekräftige Daten, vor allem Bilddaten, von wenigstens einer bildgebenden Einrichtung aufgenommen werden können.

Sind mehr als zwei bildgebende Einrichtungen vorgesehen, werden diese um den von der ersten Ecke herunterhängenden textilen Gegenstand herum angeordnet, vorzugsweise gleichmäßig verteilt. Dadurch können drei oder mehr als drei, vorzugsweise gleiche, bildgebende Einrichtungen mehrere Bilder des gleichen textilen Gegenstands, vorzugsweise gleichzeitig, aufnehmen. Je größer die Anzahl der bildgebenden Einrichtungen ist, umso größer wird dann die Wahrscheinlichkeit, dass mindestens eine bildgebende Einrichtung die zu ergreifende andere Stelle des textilen Gegenstands von einem optimalen Blickwinkel exakt ermitteln kann. Das ist dann der Fall, wenn der Blickwinkel mindestens einer bildgebenden Einrichtung der Flächennormalen des textilen Gegenstands entspricht und/oder von der Flächennormalen möglichst gering abweicht. Durch die bildgebende Ermittlung der mindestens einen zu ergreifenden Stelle des textilen Gegenstands aus unterschiedlichen Blickwinkeln werden Daten, insbesondere Bilddaten, von den bildgebenden Einrichtungen erhalten, anhand derer wenigstens die Position der oder jeder zu ergreifenden anderen Stelle insbesondere räumlich, also dreidimensional, mit großer Genauigkeit ermittelbar ist, so dass das Haltemittel der Handhabungseinrichtung diese mindestens eine andere Stelle des textilen Gegenstands zuverlässig ergreifen kann, ohne dass es zu Fehlgriffen kommt.

Gemäß einer bevorzugten Weiterbildung des Verfahrens ist es vorgesehen, dass die voneinander abweichenden Blickrichtungen bzw. -winkel aller bildgebenden Einrichtungen in einer gemeinsamen Ebene liegen. Vorzugsweise handelt es sich dabei um eine horizontale Ebene. Dann liegen alle Achsen der Blickwinkel der bildgebenden Einrichtungen in dieser Ebene, aber in unterschiedlichen Richtungen. Durch die in einer Ebene liegenden Blickrichtungen der bildgebenden Einrichtungen können Daten, insbesondere Bilddaten des textilen Gegenstands aus verschiedenen Blickwinkeln aufgenommen werden. Infolge der mehreren bildgebenden Einrichtungen können so Bilder von unterschiedlichen Blickwinkeln, insbesondere unterschiedlichen Seiten oder sogar rings um den textilen Gegenstand herum aufgenommen werden.

Eine weitere vorteilhafte Ausgestaltungsmöglichkeit des Verfahrens sieht es vor, dass die Daten, insbesondere Bilddaten, jeder bildgebenden Einrichtung dahingehend ausgewertet werden, welche bildgebende Einrichtung von der wenigstens zu ergreifenden anderen Stelle des textilen Gegenstands ein Bild aufgenommen hat, deren Daten bzw. Bilddaten es ermöglichen, die betreffende andere Stelle zuverlässig zu ergreifen. Dazu ist es vorgesehen, die Daten der einzelnen bildgebenden Einrichtungen miteinander zu vergleichen. Durch eine Auswertung der Ergebnisse des Vergleichs, insbesondere eine statistische Auswertung, kann dann entschieden werden, welche Daten bzw. Bilddaten welcher bildgebenden Einrichtung herangezogen werden, um aufgrund dieser Daten wenigstens eine Position der anderen Stelle zu ermitteln und anhand dieser Daten von der Handhabungseinrichtung das Haltemittel automatisch an diese Position zu steuern und/oder zu fahren.

Eine vorteilhafte Möglichkeit der Auswertung der Daten bzw. Bilddaten besteht darin, die Flächen der von den bildgebenden Einrichtungen aufgenommenen Bilder des textilen Gegenstands zu errechnen und zu vergleichen. Die zur größten Fläche gehörenden Daten bzw. Bilddaten werden dann verwendet, um die Position der mindestens einen anderen Stelle zu ermitteln und damit die Handhabungseinrichtung so zu steuern, dass das der Handhabungseinrichtung zugeordnete Haltemittel die gewünschte Stelle oder Stellen umfährt und hier den textilen Gegenstand ergreift, vorzugsweise einklemmt.

Besonders vorteilhaft lässt sich das Verfahren anwenden, wenn die erste Stelle, von dem der textile Gegenstand herunterhängt, eine beliebige Stelle ist. Vorteilhaft ist es aber, wenn als erste Stelle ein Eckbereich, vorzugsweise eine Ecke, des textilen Gegenstands verwendet wird. Das trägt dazu bei, dass von der ersten Stelle der textile Gegenstand so herunter hängt, dass sich zuverlässig am unteren Ende des textilen Gegenstands die mindestens eine vom Haltemittel zu ergreifende andere Stelle bildet.

Vorteilhaft ist es auch, wenn die vom Haltemittel zu ergreifende andere Stelle eine sich mit Abstand unter der ersten Stelle befindende untere Ecke oder ein anderer Eckbereich des textilen Gegenstands ist. Die zu ergreifende andere Stelle kann aber auch ein von der anderen Ecke ausgehender Randabschnitt des textilen Gegenstands sein, wenn das Haltemittel einen textilen Gegenstand nicht an einer Stelle punktuell erfassen soll sondern einen längeren Abschnitt des Randes des textilen Gegenstands.

Falls der textile Gegenstand vom Haltemittel an einem länglichen Randabschnitt, insbesondere einem von einer Ecke ausgehenden Randabschnitt, des textilen Gegenstands erfasst werden soll, ist das Haltemittel zweckmäßigerweise als eine Doppelklammer mit zwei beabstandeten Klammern bzw. Klammermäulern ausgebildet. Dann erfassen die beiden Klammern der Doppelklammer des Haltemittels an zwei beabstandeten Stellen den Randabschnitt, und zwar an gegenüberliegenden Enden desselben, wobei zwischen beabstandeten Klammermäulern der Doppelklammer der Randabschnitt gradlinig und/oder ausgestreckt gehalten ist. Ein solchermaßen erfasster Randabschnitt lässt eine zuverlässige und einfache Übergabe an ein anderes Haltemittel, insbesondere einer Klammer, einer nachfolgenden Wäschebehandlungseinrichtung zu.

Bevorzugte Ausführungsbeispiele des Verfahrens werden nachfolgend anhand einer in den Zeichnungen beispielhaft gezeigten Vorrichtung näher erläutert. Diese zeigen:
- Fig. 1: eine perspektivische Darstellung der Vorrichtung,
- Fig. 2: eine vergrößerte Einzelheit aus der Darstellung der Fig. 1 im Bereich eines herunterhängenden textilen Gegenstands,
- Fig. 3: eine Ansicht von oben auf den textilen Gegenstand,
- Fig. 4: eine Ansicht analog zur Fig. 3 gemäß einem anderen Ausführungsbeispiel der Erfindung, und
- Fig. 5: eine Ansicht analog zur Fig. 3 auf ein weiteres Ausführungsbeispiel der Erfindung.

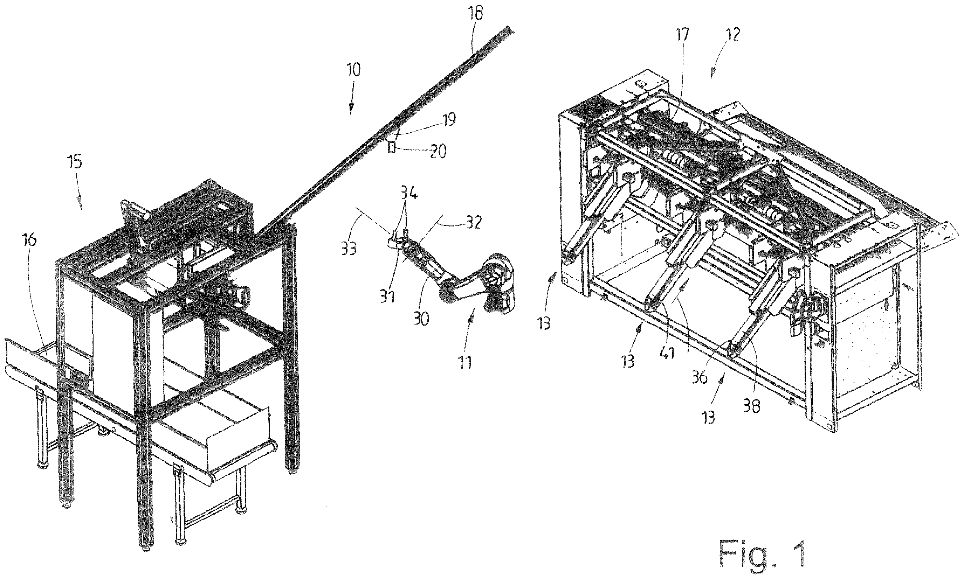

In der Fig. 1 sind ein Zuförderer 10, eine Handhabungseinrichtung 11 und eine Eingabemaschine 12 mit drei Beladestationen, die jeweils einen Beladeförderer 13 aufweisen, dargestellt. Außerdem zeigt die Fig. 1 einen am Zuförderer 10 hängenden textilen Gegenstand, bei dem es sich im gezeigten Ausführungsbeispiel um ein rechteckiges Wäschestück 14 handelt.

Die Fig. 1 zeigt des Weiteren eine Vereinzelungseinrichtung 15 vor dem Zuförderer 10. Von der Vereinzelungseinrichtung 15 wird jeweils ein einzelnes Wäschestück 14 von einem Förderer 16 an die Vereinzelungseinrichtung 15 herantransportiert und aus einem nicht dargestellten Wäscheposten herausgezogen.

Die drei mit gleichem Abstand nebeneinander an der Vorderseite der Eingabemaschine 12 angeordneten Beladeförderer 13 sind gleich ausgebildet. Vor der Eingabemaschine 12 können alternativ auch mehr oder weniger als drei Beladeförderer 13 angeordnet sein, gegebenenfalls auch nur ein einziger Beladeförderer 13. Die Beladeförderer 13 oder der wenigstens eine Beladeförderer 13 können Bestandteil einer anderen Wäschereimaschine sein, beispielsweise einer Faltmaschine, oder sich direkt vor einer Wäschereimaschine befinden, falls eine Eingabemaschine 12 nicht benötigt wird.

Vom jeweiligen Beladeförderer 13 wird jeweils ein Wäschestück 14 einer Spreizeinrichtung 17 der Eingabemaschine 12 zugeführt, die das Wäschestück 14 quergerichtet ausbreitet. Das ausgebreitete Wäschestück 14 wird dann einem Zuförderer einer auf die Eingabemaschine 12 folgenden Wäschebehandlungseinrichtung, beispielsweise einer Mangel oder auch einer Faltmaschine, zugeführt.

Der Zuförderer 10 verfügt über eine im gezeigten Ausführungsbeispiel geradlinige und leicht ansteigende Förderschiene 18. In oder an der Förderschiene 18 ist ein Klammerwagen 19 mit jeweils einer unter der Förderschiene 18 sich befindenden Klammer 20 verfahrbar. Die Klammer 20 des Klammerwagens 19 hält im gezeigten Ausführungsbeispiel eine erste Ecke 21 des Wäschestücks 14 an einer ersten Stelle 23. Die Klammer 20 kann aber auch eine andere erste Stelle 23, vorzugsweise beliebige erste Stelle 23, des Wäschestücks 14 halten. Von dieser von der Klammer 20 an der ersten Stelle 23 gehaltenen Ecke 21 hängt das Wäschestück 14 frei herunter. Dabei erstreckt sich von der Klammer 20 eine vorzugsweise mittig durch das Wäschestück 14 verlaufende vertikale Mittelachse 22 nach unten.

Der Klammerwagen 19 ist durch der Förderschiene 18 zugeordnete Antriebe, beispielsweise umlaufende Förderketten, Förderriemen oder dergleichen, längs der Förderschiene verfahrbar.

Der Zuförderer 10 kann auch anders als zuvor beschrieben und in den Figuren gezeigt ausgebildet sein, insbesondere über einen anderen Verlauf verfügen. Entscheidend ist, dass der Zuförderer 10 die zuvor beschriebene Transportaufgabe erfüllt.

Bezogen auf die Zuführrichtung des Wäschestücks 14 zum betreffenden Beladeförderer 13 befindet sich zwischen dem Zuförderer 10 und dem jeweiligen Beladeförderer 13 die Handhabungseinrichtung 11. Diese ist vorzugsweise (wie in den Figuren dargestellt) als ein Industrieroboter ausgebildet. Die Erfindung ist aber nicht auf einen bzw. einen einzigen Industrieroboter beschränkt.

Die Handhabungseinrichtung 11 verfügt über eine solche Anzahl von Achsen, die es seinem ein freies Ende aufweisenden Greifarm 30 ermöglicht, das Wäschestück 14 im dreidimensionalen Raum zu bewegen, vor allem auch zu drehen und/oder zu verschwenken. Am freien Ende des Greifarms 30 der Handhabungseinrichtung ist eine Klammer angeordnet, bei der es sich im gezeigten Ausführungsbeispiel um eine Doppelklammer 31 handelt. Bei bestimmten Greifaufgaben kann es ausreichend sein, die Klammer nicht als Doppelklammer 31, sondern als einfache Klammer auszubilden.

Die Doppelklammer 31 ist am Ende des Greifarms 30 der Handhabungseinrichtung 11 umorientierbar, beispielsweise um eine quer zur Längsmittelachse des Greifarms 30 verlaufende Schwenkachse 32 schwenkbar und/oder um eine quer durch die Schwenkachse 32 verlaufende Drehachse 33 drehbar.

Die Doppelklammer 31 verfügt über zwei voneinander beabstandete, vorzugsweise parallele Klammern mit jeweils einem Klammermaul 34. Dadurch kann bei geschlossener Doppelklammer ein Randabschnitt 35 eines beliebigen Rands, im gezeigten Ausführungsbeispiel eines unteren quergerichteten Rands 26, des jeweiligen Wäschestücks 14 zwischen den beabstandeten Klammermäulern 34 der Doppelklammer 31 gestreckt festgeklemmt und somit gehalten werden. Im gezeigten Ausführungsbeispiel geht der Randabschnitt 35 des Rands 26 von einer vorzugsweise freien unteren Ecke 24 des Wäschestücks 14 aus. Hierauf ist die Erfindung aber nicht beschränkt. Der Randabschnitt 35 kann sich auch zwischen benachbarten Ecken des Rands 26 des Wäschestücks 14 oder eines anderen Rands, beispielsweise Seitenrands, befinden.

Die im dargestellten Ausführungsbeispiel als Industrieroboter ausgebildete Handhabungseinrichtung 11 ist um so viele Achsen verdrehbar oder verschwenkbar, einschließlich der Verdrehbarkeit und/oder Verschwenkbarkeit der Doppelklammer 31, am freien Ende des Greifarms 30, um das Wäschestück 14 von der Doppelklammer 31 automatisch ergreifen zu können und das Wäschestück 14 vom Zuführförderer 10 in eine Übergabeposition an den dazu jeweils bereiten bzw. vorgesehenen freien Beladeförderer 13 bringen zu können und an den gewünschten Beladeförderer 13 zu übergeben.

Jeder der gleich ausgebildeten Beladeförderer 13 verfügt über einen unteren, längeren umlaufend antreibbaren Fördergurt 36 und einen teilweise über dem Obertrum 37 des Fördergurts 36 angeordneten oberen kürzeren Fördergurt 38. Der obere Fördergurt 38 ist gegenüber dem Anfang des unteren Fördergurts 36 in Förderrichtung zurückversetzt zur Bildung eines Auflegebereichs 41. Auf diesen Auflegebereich 41 kann das betreffende Wäschestück 14 mit vornliegendem Randabschnitt 35 von der Handhabungseinrichtung 11 aufgelegt werden, so dass der Rand 26 U-förmig von der Doppelklammer 31 der Handhabungseinrichtung 11 auf den Auflegebereich 41 des jeweiligen Beladeförderers 13 auflegbar ist.

An der Stelle des Beladeförderers 13 bzw. der Beladeförderer 13 können auch andere Zuführeinrichtungen vorgesehen sein, die das Wäschestück 14 zu der Spreizeinrichtung 17 der Eingabemaschine 12 transportieren. Auch ist es denkbar, von der Handhabungseinrichtung 11 das Wäschestück 14 direkt in die Spreizeinrichtung 17 der Eingabemaschine 12 einzugeben. Schließlich ist es auch denkbar, von der Handhabungseinrichtung 11 das jeweilige Wäschestück 14 automatisch an einen anderen Förderer zu übergeben, der vor der Eingabemaschine 12 oder einer anderen Wäschebehandlungseinrichtung angeordnet ist. Dieser Förderer kann die Beladeförderer 13 ersetzen oder das Wäschestück 14 zu dem mindestens einen Beladeförderer 13 transportieren.

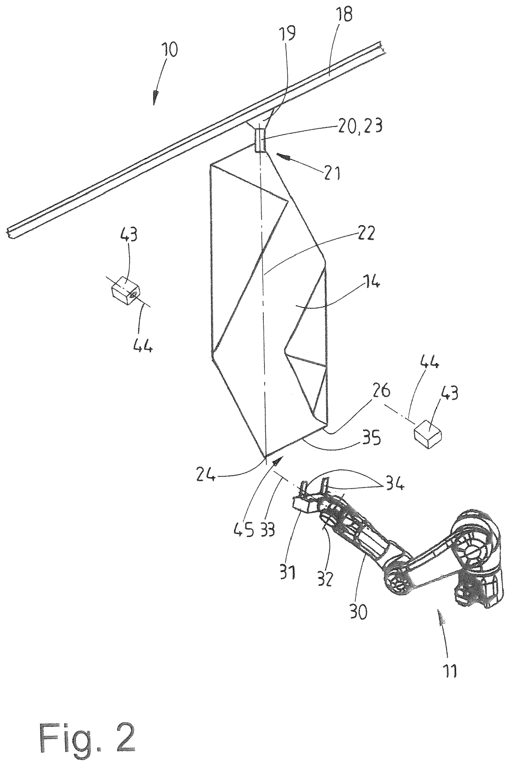

Gemäß den Darstellungen der Fig. 2 bis 4 sind dem von der Klammer 20 herunterhängenden Wäschestück 14 zwei insbesondere gleiche, vorzugsweise digitale, bildgebende Einrichtungen zugeordnet. Bei den bildgebenden Einrichtungen handelt es sich bevorzugt um Kameras 43, vor allem Digitalkameras. Das können ein zweidimensionales oder auch dreidimensionales Bild aufnehmende Kameras 43 sein. Als Kameras 43 kommen sowohl Schwarz-Weiß-Kameras als auch - wenn es der Einsatz erfordert - Farbkameras in Betracht. Optische Achsen der Kameras 43 entsprechen der Blickrichtung 44 der jeweiligen Kamera.

Die Kameras 43 sind an verschiedenen Stellen neben dem Wäschestück 14 angeordnet. Dadurch sind die Kameras 43 mit unterschiedlichen Blickrichtungen 44 auf das Wäschestück 14 gerichtet. Die Anordnung der Kameras 43 ist dabei bevorzugt so getroffen, dass die Blickrichtungen 44 direkt auf oder zumindest annähernd auf die vertikale Mittelachse 22 des Wäschestücks 14 gerichtet sind.

Weiterhin sind die Kameras 43 dem von der Klammer 20 herunterhängenden Wäschestück 14 so zugeordnet und mit einer solchen Optik versehen, dass jede Kamera 43 zumindest einen unteren Teil des Wäschestücks 14 bildlich aufnimmt und hiervon ein Bild erzeugen kann. Dieser untere Bereich des Wäschestücks 14 ist so gewählt, dass das von der jeweiligen Kamera 43 aufgenommene Bild eine Größe aufweist, die es sicherstellt, dass die untere, andere Stelle 45 sämtlicher in Betracht kommender Wäschestücke 14, also Wäschestücke 14 unterschiedlicher Größen, von der Handhabungseinrichtung 11 zuverlässig ergriffen werden kann.

Die zu erfassende andere untere Stelle 45 des Wäschestücks 14 ist im gezeigten Ausführungsbeispiel der von der unteren freien Ecke 24 ausgehende Randabschnitt 35 des Wäschestücks 14. Auch wenn in gezeigten Ausführungsbeispiel der Randabschnitt 35 von einer Doppelklammer 31 mit zwei beabstandeten Klammermäulern 34 ergriffen wird, wird dies im Folgenden der Einfachheit halber auch als andere Stelle 45 bezeichnet, obwohl tatsächlich die Doppelklammer 31 den Randabschnitt 35 des Wäschestücks 14 an seinen beiden Enden an zwei beabstandeten, aber zusammengehörenden, Stellen ergreift. Deswegen soll der hier verwendete Begriff der anderen Stellen 45 nicht einschränkend auf das Ergreifen des Wäschestücks 14 an nur einer einzigen Stelle verstanden werden; schließt vielmehr auch das Ergreifen des Wäschestücks 14 von der Doppelklammer 31 an zwei beabstandeten, aber zusammengehörenden, Stellen ein.

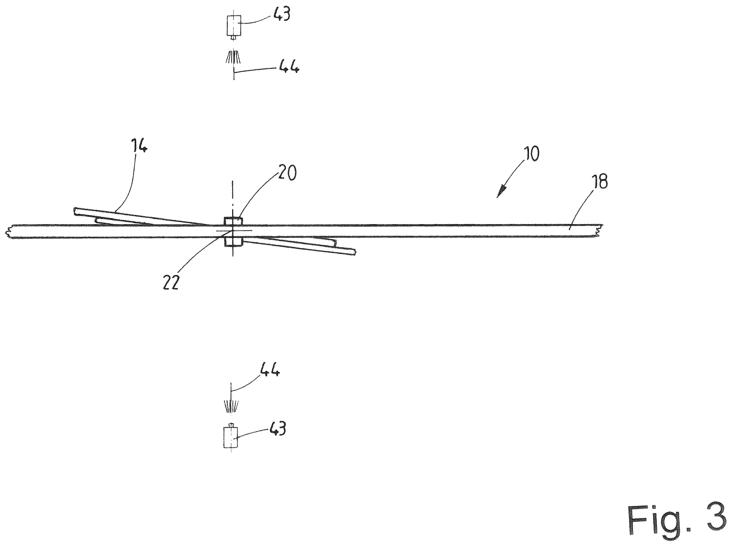

Das Ausführungsbeispiel der Fig. 2 und 3 zeigt zwei einander gegenüberliegende, vorzugsweise digitale, Kameras 43 auf gegenüberliegenden Seiten des Wäschestücks 14. Dabei liegt die der Blickrichtung 44 entsprechende optische Achse jeder der beiden Kameras 43 auf einer gemeinsamen gedachten Linie. Diese Linie läuft bevorzugt horizontal, auch wenn das aus der Darstellung der Fig. 2 nicht ersichtlich ist, weil es sich hierbei um eine perspektivische Darstellung handelt. Dann liegen die optischen Achsen der beiden Kameras 43 in einer gemeinsamen horizontalen Ebene, die bevorzugt die Mittelachse 22 des herunterhängenden Wäschestücks 14 senkrecht schneidet. Denkbar ist es aber auch, dass die optischen Achsen der Kameras 43 in einer gemeinsamen Ebene liegen, die die Mittelachse 22 nicht unter einem rechten, sondern einem stumpfen Winkel schneidet.

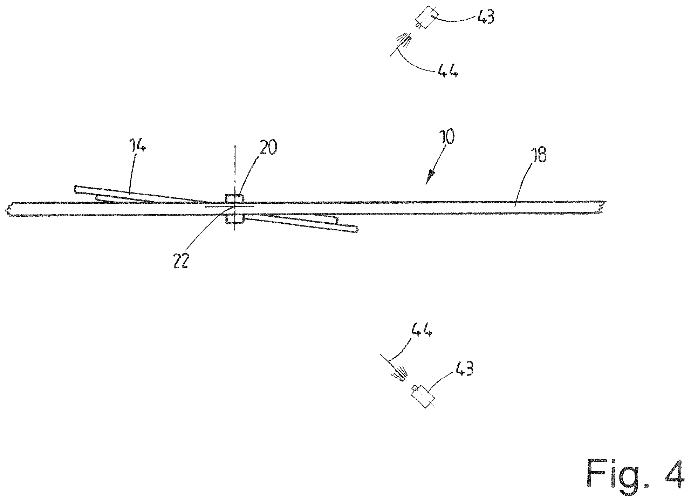

Das Ausführungsbeispiel der Fig. 4 zeigt ebenfalls zwei vorzugsweise gleich ausgebildete, digitale Kameras 43. Jedoch sind abweichend von den Ausführungsbeispielen der Fig. 2 und 3 diese beiden Kameras 43 nicht einander gegenüberliegend, nämlich von oben gesehen um 180° versetzt zueinander angeordnet, sondern nur um 90° versetzt. Dabei verlaufen die den optischen Achsen der beiden Kameras 43 entsprechenden Blickrichtungen 44 unter einem rechten Winkel zueinander. Die Blickrichtungen 44 schneiden hier auch die Mittelachse 22 des Wäschestücks 14; können aber auch geringfügig daneben liegen. Außerdem liegen die um 90° zueinander versetzten Blickrichtungen 44 in einer gemeinsamen Ebene, die vorzugsweise senkrecht die Mittelachse 22 des herunterhängenden Wäschestücks 14 schneidet. Alternativ ist es auch denkbar, die beiden Kameras 43 unter einem Winkel zueinander anzuordnen, der größer als 90° und kleiner als 180° ist, beispielsweise 120° oder 160° beträgt.

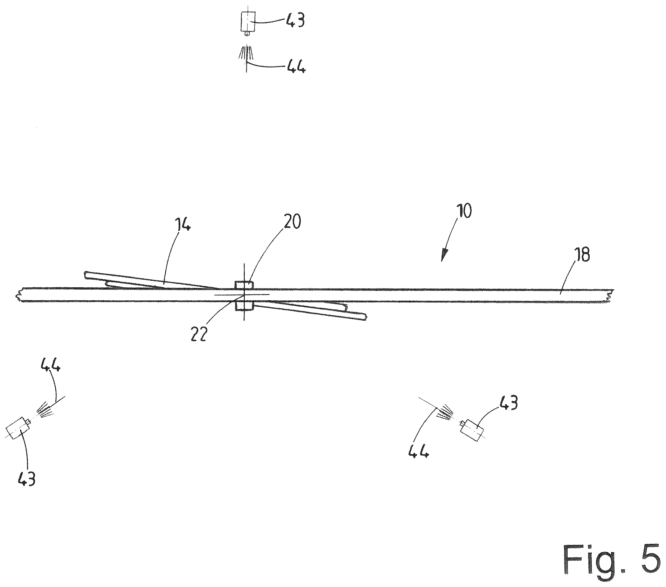

Die Fig. 5 zeigt ein Ausführungsbeispiel der Vorrichtung mit drei auch vorzugsweise gleichen Kameras 43. Diese drei Kameras 43 sind gleichmäßig ringsherum um das Wäschestück 14 verteilt. Dadurch sind jeweils zwei benachbarte Kameras 43 um 120° zueinander versetzt. Es sind auch andere Anordnungen denkbar, beispielsweise solche, wo die Kameras 43 nicht mit gleichmäßigem Versatz zueinander rings um das Wäschestück 14 verteilt sind.

Es sind weitere, in den Figuren nicht gezeigte Ausführungsbeispiele der Erfindung denkbar, bei denen mehr als drei vorzugsweise digitale Kameras 43 vorgesehen sind, beispielsweise vier oder fünf Kameras 43. Diese Kameras 43 sind dann ebenfalls rings um das Wäschestück 14 verteilt, und zwar sowohl mit gleichmäßigem Versatz zueinander als auch in unregelmäßiger Anordnung.

Das erfindungsgemäße Verfahren sieht es vor, den jeweiligen textilen Gegenstand, im gezeigten Ausführungsbeispiel ein Wäschestück 14, automatisch zu ergreifen. Damit dieses automatische Ergreifen des Wäschestücks 14 rasch und vor allem auch zuverlässig erfolgen kann, sind mehrere Kameras 43 vorgesehen, die das Wäschestück 14 aus unterschiedlichen Blickrichtungen 44 aufnehmen. Bei den Kameras 43 handelt es sich bevorzugt um Digitalkameras, die elektronisch verarbeitbare, insbesondere weiterverarbeitbare, Daten, vor allem Bilddaten, vom Wäschestück 14 oder zumindest einem solchen Teil desselben erzeugen, indem sich die zu ergreifende andere Stelle 45 befindet.

Bei den hier gezeigten Ausführungsbeispielen der Erfindung ist es vorgesehen, dass die Kameras 43 aus verschiedenen Blickwinkeln, insbesondere Blickrichtungen 44, das Wäschestück 14 mindestens hinsichtlich des maßgeblichen Bereichs gemeinsam, vorzugsweise gleichzeitig, aufnehmen, nämlich quasi fotografieren. Dadurch liefert jede Kamera 43 einen vorzugsweise digitalen Bilddatensatz oder gegebenenfalls auch jeweils mehrere Bilddatensätze. Diese werden dann von einer Steuerung der Handhabungseinrichtung 11 oder einem Rechner so bearbeitet, dass danach die Handhabungseinrichtung 11 die automatisch zu ergreifende andere Stelle 45 gezielt und zuverlässig anfahren und ergreifen kann. Die von den Kameras 43 aufgenommenen verrechneten Daten, insbesondere Bilddaten, ergeben mindestens die Position der anderen Stelle 45 oder im hier beschriebenen Ausführungsbeispiel die Position, an dem die beiden beabstandeten Klammermäuler 34 der Doppelklammer 31 den Randabschnitt 35 des Wäschestücks 14 ergreifen sollen. Aus den beiden Positionen lässt sich auch die Richtung des Randabschnitts 35 ermitteln, so dass die Doppelklammer 31 von der Handhabungseinrichtung 11 derart verschwenkbar ist, dass sie parallelverlaufend von unten an den zu erfassenden Randabschnitt 35 herangefahren werden kann.

Das erfindungsgemäße Verfahren ermöglicht die genaue Bestimmung der Position, des Verlaufs, insbesondere der Neigung und/oder gegebenenfalls die Länge des Randabschnitts 35 des von der Klammer 20 herunterhängenden Wäschestücks 14 oder alternativ auch nur eine einzige andere Stelle 45 bei jeder beliebigen Orientierung des von der Klammer 20 herunterhängenden Wäschestücks 14. Insbesondere kann das Wäschestück 14 um die vertikale Mittelachse 22 verdreht sein. Das Wäschestück 14 braucht deshalb zur Durchführung des erfindungsgemäßen Verfahrens nicht so unter der Förderschiene 18 zu hängen, wie es in den Fig. 2 bis 5 beispielhaft dargestellt ist.

Es ist denkbar, zur Verbesserung der Qualität der von den Kameras 43 aufgenommenen digitalen Bilder und/oder ihrer Daten bzw. Bilddaten das Wäschestück 14 zur digitalen bildlichen Erfassung desselben vor einer Wand oder einem sonstigen Stabilisierungsmittel, beispielsweise einem Rahmen, Gitter oder mindestens einem Stab zu positionieren.

Beim Ausführungsbeispiel der Fig. 3 mit einander gegenüberliegenden Kameras 43, deren Blickrichtungen um 180° zueinander versetzt sind, ist es möglich, jederzeit und zuverlässig betreffende andere Stellen 45 des Wäschestücks 14 aufzunehmen, wenn zum Beispiel eine Kamera 43 verdeckt ist oder sich ein Gegenstand im Blickfeld einer Kamera 43 befindet, die keine Aufnahme des Wäschestücks 14 zulässt oder nur eine teilweise Aufnahme des Wäschestücks 14 zulässt. Dann können die von der anderen unverdeckten Kamera 43 aufgenommenen Daten, insbesondere Bilddaten, verwendet werden, um die Position und die Ausrichtung des Randabschnitts 35 des Wäschestücks 14 zu errechnen und die Doppelklammer 31 von der Handhabungseinrichtung 11 gezielt und zuverlässig, insbesondere positionsgenau, so an den Randabschnitt 35 heranzufahren, dass dieser exakt von den beiden Klammermäulern 34 der Doppelklammer 31 erfasst werden kann. Das Gleiche gilt für den Fall, dass von einer einzelnen Klammer nur eine einzige andere Stelle 45 automatisch ergriffen werden soll.

Bei den beiden um 90° versetzten Kameras 43 des Ausführungsbeispiels der Fig. 4 kann dann, wenn die Blickrichtung 44 einer ersten Kamera 43 senkrecht auf die Fläche, nämlich Flachseite, des Wäschestücks 14 gerichtet ist und die zweite Kamera 43 senkrecht auf eine Schmalseite des Wäschestücks 14 gerichtet ist, wodurch diese Kamera 43 kein Bild von der Flachseite des Wäschestücks 14 oder mindestens eines Teils desselben aufnehmen kann, die erste Kamera 43 ein Bild mit verwertbaren Daten von der Flachseite des Wäschestücks 14 liefern.

In anderen Fällen, wo die Blickrichtung 44 beider Kameras 43 unter einem Winkel zwischen 0° und 90° zur Flachseite des von der Klammer 20 herunterhängenden Wäschestücks 14 verläuft, nehmen beide Kameras 43 unterschiedlich große Flächen vom Wäschestück 14 auf, und zwar abgesehen von dem Fall, dass die Blickrichtungen 44 beider Kameras 43 unter 45° zur Flachseite des Wäschestücks 14 verlaufen. Dann nehmen beide Kameras 43 etwa gleichgroße Flächen des Wäschestücks 14 auf.

Wenn beide Kameras 43 Daten, insbesondere Bilddaten, liefern, deren Auswertungen unterschiedlich große Flächen des Wäschestücks 14 ergeben, bedeutet das, dass die Blickrichtungen 44 beider Kameras 43 in verschiedenen Winkeln auf die Fläche des Wäschestücks 14 treffen. Aus den Abweichungen der Flächen kann dann errechnet werden, unter welchem Winkel die Blickrichtung 44 der jeweiligen Kamera 43 auf die Fläche des Wäschestücks 14 trifft. Daraus kann dann die wahre Fläche des Wäschestücks 14 errechnet werden, woraus dann die Position des Randabschnitts 35, seine Neigung und/oder seine Länge ermittelbar sind. Wenn beide Blickrichtungen 45 mit 45° auf die Fläche des Wäschestücks 14 treffen, sind die Flächen gleich groß, so dass daraus eine 45°-Richtung des Wäschestücks zur jeweiligen Kamera 43 abgeleitet werden kann. Wenn eine Kamera 43 ein Bild aufnimmt, deren Fläche praktisch nahezu "0" ist, bedeutet das, dass die Blickrichtung 44 dieser Kamera 43 in Richtung der Schmalseite des Wäschestücks 14 verläuft. Dann gibt das Bild, das die andere Kamera 43 vom Wäschestück 14 aufgenommen hat, die exakte Fläche des Wäschestücks 14, nämlich der Flachseite desselben, wieder. Die Bilddaten dieser Kamera 43 sind dann ohne Umrechnung zur Ermittlung der Position, der Lage und/oder der Länge des Randabschnitts 35 verwertbar.

Analog zur vorstehenden Beschreibung für zwei Kameras 43, die gemäß der Fig. 4 um 90° zueinander versetzt sind, wird vorgegangen, wenn gemäß dem Ausführungsbeispiel der Fig. 5 drei Kameras 43 vorhanden sind. Durch die Verteilung dieser drei Kameras 43 rings um das Wäschestück 14 herum und den bekannten Winkeln zwischen den einzelnen Kameras 43, die vorzugsweise gleich sind und demzufolge 120° betragen, kann bei jeder beliebigen Orientierung des Wäschestücks 14 zuverlässig und exakt die Größe und/oder Fläche der Flachseite des Wäschestücks 14 erfasst werden und dadurch die Position, die Lage und gegebenenfalls die Länge des Randabschnitts 35 ermittelt werden. Nur ist infolge der drei Kameras 43 die Ermittlung der Position, der Neigung und/oder der Länge des Randabschnitts 35 genauer. Es stehen beim Ausführungsbeispiel der Fig. 5 mit drei vorzugsweise gleichen Kameras 43 immer zwei Kameras 43 zur Verfügung, die ein auswertbares Bild vom Wäschestück 14 aufnehmen, wenn die Blickrichtung 44 der dritten Kamera 43 auf die Schmalseite des Wäschestücks 14 gerichtet ist.

Die Erfindung eignet sich nicht nur für die in den Figuren gezeigte Vorrichtung. Die Erfindung eignet sich auch für andere Vorrichtungen in Wäschereien, bei denen Wäschestücke automatisch zuverlässig ergriffen werden müssen. Das ist nicht nur bei der in den Figuren gezeigten Vorrichtung der Fall, wo das Wäschestück 10 automatisch vor der Eingabemaschine 12 ergriffen wird. Das nach dem erfindungsgemäßen Verfahren erfolgende automatische Ergreifen von Wäschestücken 14 kann auch vor anderen Wäschereimaschinen, beispielsweise Faltmaschinen, eingesetzt werden, aber auch zu Sortiervorgängen und/oder Kontrollvorgängen, wenn beispielsweise Schmutzwäsche auf Fremdkörper untersucht werden soll.

### Bezugszeichenliste:

- 10: Zuförderer
- 11: Handhabungseinrichtung
- 12: Eingabemaschine
- 13: Beladeförderer
- 14: Wäschestück
- 15: Vereinzelungseinrichtung
- 16: Förderer
- 17: Spreizeinrichtung
- 18: Förderschiene
- 19: Klammerwagen
- 20: Klammer
- 21: Ecke
- 22: Mittelachse
- 23: erste Stelle
- 24: freie Ecke
- 26: Rand
- 30: Greifarm
- 31: Doppelklammer
- 32: Schwenkachse
- 33: Drehachse
- 34: Klammermaul
- 35: Randabschnitt
- 36: Fördergurt
- 38: Fördergurt
- 41: Auflegebereich
- 43: Kamera
- 44: Blickrichtung
- 45: andere Stelle

## Patentansprüche

1. Verfahren zum Ergreifen eines textilen Gegenstands, wobei der von einer ersten Stelle (23) herunterhängende textile Gegenstand an mindestens einer anderen Stelle (45) von einem Haltemittel einer Handhabungseinrichtung (11) automatisch ergriffen wird und wobei das Haltemittel von der Handhabungseinrichtung (11) gesteuert von Daten wenigstens einer die vom Haltemittel zu ergreifende andere Stelle (45) aufnehmenden bildgebenden Einrichtung automatisch an die mindestens eine andere Stelle (45) herangefahren wird, **dadurch gekennzeichnet, dass** die wenigstens eine andere Stelle (45) von mindestens zwei bildgebenden Einrichtungen unter verschiedenen Blickrichtungen (44) aufgenommen wird, durch eine Auswertung der Ergebnisse eines Vergleichs der Daten der einzelnen bildgebenden Einrichtungen miteinander entschieden wird, welche Daten welcher bildgebenden Einrichtung herangezogen werden, um aufgrund dieser Daten wenigstens eine Position der anderen Stelle zu ermitteln und mindestens ein Teil der dabei erhaltenen Daten verwendet wird, um das Haltemittel von der Handhabungseinrichtung (11) automatisch an die mindestens eine andere Stelle (45) des textilen Gegenstands heranzufahren sowie zu ergreifen.

2. Verfahren nach Anspruch 1, **dadurch gekennzeichnet, dass** die bildgebenden Einrichtungen derart relativ zueinander, vorzugsweise um den textilen Gegenstand verteilt, angeordnet werden, dass die Blickrichtung (44) mindestens einer der bildgebenden Einrichtungen auf die mindestens eine andere Stelle (45) gerichtet ist.

3. Verfahren nach Anspruch 1 oder 2, **dadurch gekennzeichnet, dass** von zwei, vorzugsweise gleichen, bildgebenden Einrichtungen die jeweils zu ergreifende andere Stelle (45) aus 90° bis 180° voneinander abweichenden Blickrichtungen (44) aufgenommen wird.

4. Verfahren nach einem der vorhergehenden Ansprüche, **dadurch gekennzeichnet, dass** von mehr als zwei, vorzugsweise gleichen, bildgebenden Einrichtungen die jeweils zu ergreifende andere Stelle (45) des textilen Gegenstands unter verschiedenen Blickrichtungen (44) aufgenommen wird, die bezogen auf die Blickrichtungen (44) benachbarter bildgebender Einrichtungen um 360° dividiert durch die Anzahl der bildgebenden Einrichtung im Winkel voneinander abweichen.

5. Verfahren nach einem der vorhergehenden Ansprüche, **dadurch gekennzeichnet, dass** die Blickrichtungen (44) aller bildgebenden Einrichtungen in einer gemeinsamen Ebene, vorzugsweise horizontalen Ebene, liegen.

6. Verfahren nach einem der vorhergehenden Ansprüche, **dadurch gekennzeichnet, dass** die Daten, insbesondere Bilddaten, jeder bildgebenden Einrichtung dahingehend ausgewertet, vorzugsweise miteinander verglichen werden, welche bildgebende Einrichtung von der mindestens einen zu ergreifenden anderen Stelle (45) eindeutige Daten, nämlich unter einem möglichst rechten oder stumpfen Winkel zur Ebene bzw. Flachseite des textilen Gegenstands, aufgenommen hat.

7. Verfahren nach einem der vorhergehenden Ansprüche, **dadurch gekennzeichnet, dass** bei von mehreren bildgebenden Einrichtungen aufgenommenen Daten, insbesondere Bilddaten, ein Vergleich der aus den Daten ermittelten Fläche des textilen Gegenstands auf den von den bildgebenden Einrichtungen aufgenommenen Bildern des gleichen textilen Gegenstands erfolgt und die Daten von derjenigen bildgebenden Einrichtung, die die größte Fläche vom textilen Gegenstand erfasst hat, zum automatischen Ergreifen desselben herangezogen werden.

8. Verfahren nach einem der vorhergehenden Ansprüche, **dadurch gekennzeichnet, dass** als erste Stelle (23) eine beliebige Stelle (23), vorzugsweise ein Eckbereich und/oder eine Ecke, des textilen Gegenstands verwendet wird.

9. Verfahren nach einem der vorhergehenden Ansprüche, **dadurch gekennzeichnet, dass** als mindestens eine andere Stelle (45) ein sich mit Abstand unter der ersten Stelle (23) des textilen Gegenstands befindender anderer Eckbereich, eine andere Ecke oder ein von der andere Ecke ausgehender Randabschnitt (35) des textilen Gegenstands verwendet wird.

10. Verfahren nach einem der vorhergehenden Ansprüche, **dadurch gekennzeichnet, dass** der Randabschnitt (35) des textilen Gegenstands von einer Doppelklammer (31) des Haltemittels ergriffen wird und/oder das Haltemittel von der Handhabungseinrichtung (11) bewegbar ist, vorzugsweise räumlich bewegbar ist.

## Claims

1. A method for gripping a textile item, wherein the textile item suspended from a first location (23) is automatically gripped by a holding means of a handling installation (11) at least one other location (45), and wherein the holding means of the handling installation (11), controlled by data of at least one image-generating installation that records the other location (45) to be gripped by the holding means, is automatically moved up to the at least one other location (45), **characterized in that** the at least one other location (45) is recorded from different viewing directions (44) by at least two image-generating installations, by evaluating the results of a comparison of the data of the individual image-generating installations with each other, it is decided which data of which image-generating installation are utilized so as to determine, by virtue of this data, at least one position of the other location, and at least part of the data obtained herein is used by the handling installation (11) for automatically moving the holding means up to at least one other location (45) of the textile item and for gripping the latter.

2. The method as claimed in claim 1, **characterized in that** the image-generating installations are disposed relative to one another, preferably distributed about the textile item, in such a manner that the viewing direction (44) of at least one of the image-generating installations is directed toward the at least one other location (45).

3. The method as claimed in claim 1 or 2, **characterized in that** the respective other location (45) to be gripped is recorded by two, preferably identical, image-generating installations from viewing directions (44) which differ from one another by 90° to 180°.

4. The method as claimed in any one of the preceding claims, **characterized in that** the respective other location (45) to be gripped of the textile item is recorded by more than two, preferably identical, image-generating installations from different viewing directions (44) which in terms of the angle of the viewing directions (44) of neighbouring image-generating installations differ from one another by 360° divided by the number of image-generating installations.

5. The method as claimed in any one of the preceding claims, **characterized in that** the viewing directions (44) of all image-generating installations lie in a common, preferably horizontal, plane.

6. The method as claimed in any one of the preceding claims, **characterized in that** the items of data, in particular image data, of each image-generating installation are evaluated, preferably compared with one another with a view to which image-generating installation has recorded unequivocal data from the at least one other location (45) to be gripped, namely at an ideally right or obtuse angle in relation to the plane or the flat side, respectively, of the textile item.

7. The method as claimed in any one of the preceding claims, **characterized in that,** in the case of data, in particular image data, being recorded by a plurality of image-generating installations, a comparison of the area of the textile item determined from the data takes place based on the images of the same textile item recorded by the image-generating installations, and the data of that image-generating installation that has detected the largest area of the textile item are utilized for automatically gripping the latter.

8. The method as claimed in any one of the preceding claims, **characterized in that** an arbitrary location (23), preferably a corner region and/or a corner of the textile item is used as the first location (23).

9. The method as claimed in any one of the preceding claims, **characterized in that** another corner region which is situated at a spacing below the first location (23) of the textile item, another corner, or a peripheral portion (35) of the textile item that emanates from the other corner is used as at least one other location (45).

10. The method as claimed in any one of the preceding claims, **characterized in that** the peripheral portion (35) of the textile item is gripped by a double clamp (31) of the holding means, and/or the holding means can be moved, preferably moved in space, by the handling installation (11).

## Revendications

1. Procédé de préhension d'un objet textile, dans lequel l'objet textile suspendu en un premier emplacement (23) est saisi automatiquement en au moins un autre emplacement (45) par un moyen de maintien d'un dispositif de manipulation (11) et dans lequel le moyen de maintien est approché automatiquement dudit au moins un autre emplacement (45) par le dispositif de manipulation (11), sous la commande de données d'au moins un dispositif d'imagerie enregistrant l'autre emplacement (45) à saisir par le moyen de maintien, **caractérisé en ce que** ledit au moins un autre emplacement (45) est enregistré par au moins deux dispositifs d'imagerie sous différentes directions de vue (44), **en ce qu'**il est décidé, par une évaluation des résultats d'une comparaison des données des différents dispositifs d'imagerie entre eux, quelles données de quel dispositif d'imagerie sont utilisées pour déterminer, sur la base de ces données, au moins une position de l'autre emplacement, et **en ce qu'**au moins une partie des données ainsi obtenues est utilisée pour déplacer automatiquement le moyen de maintien du dispositif de manipulation (11) vers ledit au moins un autre emplacement (45) de l'objet textile, et saisir celui-ci.

2. Procédé selon la revendication 1, **caractérisé en ce que** les dispositifs d'imagerie sont disposés les uns par rapport aux autres, de préférence sont répartis autour de l'objet textile, de telle sorte que la direction de vue (44) d'au moins un des dispositifs d'imagerie soit dirigée vers ledit au moins un autre emplacement (45).

3. Procédé selon la revendication 1 ou 2, **caractérisé en ce que** l'autre emplacement (45) à saisir est enregistré par deux dispositifs d'imagerie, de préférence identiques, à partir de directions de vue (44) divergeant de 90° à 180°.

4. Procédé selon l'une des revendications précédentes, **caractérisé en ce que** l'autre emplacement (45) de l'objet textile à saisir est enregistré depuis différentes directions de visualisation (44) par plus de deux dispositifs d'imagerie, de préférence identiques, sous différentes directions de vue (44) qui, par rapport aux directions de vue (44) de dispositifs d'imagerie voisins, diffèrent angulairement, les unes des autres, de 360° divisés par le nombre de dispositifs d'imagerie.

5. Procédé selon l'une des revendications précédentes, **caractérisé en ce que** les directions de vue (44) de tous les dispositifs d'imagerie se trouvent dans un plan commun, de préférence un plan horizontal.

6. Procédé selon l'une des revendications précédentes, **caractérisé en ce que** les données, en particulier les données d'image, de chaque dispositif d'imagerie sont évaluées, de préférence comparées entre elles, pour déterminer quel dispositif d'imagerie a pris des données univoques dudit au moins un autre emplacement (45) à saisir, à savoir sous un angle aussi droit ou aussi obtus que possible par rapport au plan ou au côté plat de l'objet textile.

7. Procédé selon l'une des revendications précédentes, **caractérisé en ce que**, dans le cas de données, en particulier de données d'image, enregistrées par plusieurs dispositifs d'imagerie, une comparaison de la surface de l'objet textile déterminée à partir des données est effectuée sur les images du même objet textile enregistrées par les dispositifs d'imagerie, et les données sont utilisées par le dispositif d'imagerie qui a enregistré la plus grande surface de l'objet textile pour saisir automatiquement ce dernier.

8. Procédé selon l'une des revendications précédentes, **caractérisé en ce que** l'on utilise en tant que premier emplacement (23) un emplacement quelconque (23), de préférence une zone de coin et/ou un coin, de l'objet textile.

9. Procédé selon l'une des revendications précédentes, **caractérisé en ce que** l'on utilise en tant qu'au moins un autre emplacement (45) une autre zone de coin, un autre coin ou une portion de bord (35) de l'article textile partant de l'autre coin et se trouvant à distance sous le premier emplacement (23) de l'article textile.

10. Procédé selon l'une des revendications précédentes, **caractérisé en ce que** la portion de bord (35) de l'objet textile est saisie par une double pince (31) du moyen de maintien et/ou le moyen de maintien est apte à être déplacé par le dispositif de manipulation (11), de préférence est apte à être déplacé dans l'espace.
